# EUROPEAN PATENT SPECIFICATION

(11) **EP 3 554 813 B1**
(45) Date of publication and mention of the grant of the patent: **26.01.2022**
(21) Application number: 17811612.5
(22) Date of filing: 13.12.2017
(51) Int. Cl.: B29D 30/06, B29C 33/44, B29C 33/46

(54) **TREAD STRIP CURING MOULD**
LAUFSTREIFENHÄRTUNGSFORM
MOULE DE DURCISSEMENT DE BANDE DE ROULEMENT

(30) Priority: 14.12.2016 IT 201600126146
(43) Date of publication of application: 23.10.2019
(73) Proprietor: Bridgestone Corporation, Chuo-Ku Tokyo 104-8340 (JP)
(72) Inventor: IOZIA, Francesco, 00128 Roma (IT)
(74) Representative: Marchetti, Alessio
(86) International application number: PCT/EP2017/082525
(87) International publication number: WO 2018/108967

(56) References cited:
- EP-A1- 0 594 044
- EP-A1- 1 779 989
- EP-A1- 2 689 920
- WO-A1-2010/002390
- WO-A1-2015/105821
- CN-U- 203 844 057
- DE-A1-102014 216 869
- DE-C1- 19 543 276
- TW-A- 201 132 482
- US-A1- 2012 256 349

## Description

### Technical field of the invention

The present invention pertains to a tread strip curing mould and particularly relates to means for improving the extraction of the cured tread strip from the curing mould.

### Background

Cold-retreading a tyre comprises removing the worn tread from the tyre, and applying a new, cured tread or tread strip to the tyre carcass. Applying the new, cured tread to the carcass comprises winding a green-rubber cushion and a so-called PCT (Pre-Cured Tread) strip around the carcass; and the carcass, wound inside the cushion and the pre-cured tread strip, is then inserted inside an autoclave and cured further to grip the tread firmly to the carcass by means of the binding action of the cushion.

One example of a pre-cured tread strip, ready for application to a tyre carcass, is described in Patent US5277727A1.

One example of a cold tyre retreading station employing the above method is described in Patent US6368439B1.

Constructing the pre-cured tread strip comprises extruding a green-rubber compound into a continuous green (or uncured) tread strip, which is then cut crosswise into a succession of green tread strips of given length. Each green tread strip is inserted inside a flat or substantially flat curing mould, in which it is cured; and, at the end of the curing process, the cured tread strip must be extracted from the curing mould by detaching the cured tread strip from the parts of the curing mould defining a negative of the tread pattern.

The flat curing mould is normally equipped with a gripper, which is initially integrated in the curing mould, engages one end of the cured tread strip, and is lifted up and drawn along by an actuating device to gradually extract the cured tread strip from the curing mould.

Two examples of extracting a cured tread strip from a flat curing mould are described in Patent Applications US2004197432A1 and US2011148001A1.

As it is extracted from the flat curing mould, the cured tread strip bends roughly 180° with a small bend radius in the extraction area, thus subjecting the rubber to severe mechanical stress concentrated in the extraction area, and which may result in the formation of cracks (i.e. deep, narrow fissures) normally originating at the grooves in the tread pattern. In which case, the cured tread strip must obviously be scrapped.

EP2689920 discloses a method for assisting the demoulding of a vulcanized pneumatic vehicle tyre from a vulcanization mould wherein the profiled tread-forming mould segments each comprise a segment shoe and a profiled insert connected thereto, which is provided with a plurality of ventilation holes, and wherein immediately before the opening of the vulcanization mould a gaseous medium under pressure is passed through the vent holes in the direction of vulcanized tyre.

EP1779989 discloses a vulcanizing mould for moulding a sidewall of a tire provided with exhaust slots having outer open ends opening in the outside surface thereof, and grooves of a predetermined width formed in the moulding surface thereof and communicating with inner open ends of the exhaust slots.

### Summary of the invention

### <Technical Problem>

The technical problem underlying the present invention is therefore to provide a tread strip curing mould designed to eliminate the drawbacks described above.

### <Solution to Problem>

Above problem is solved by a moulding apparatus comprising ejecting elements according to claim 1.

Preferred features of the invention are recited in the dependent claims

### <Advantageous Effects of Invention>

The moulding apparatus comprising the ejecting elements reduces or eliminates the risk of damaging the cured tread strip when removing it from the mould. Without the bending of 180° of tread strip the cured rubber material will not shear along mould elements forming the negative of the tread profile. The cured tread strip will instead be extracted in a direction substantially orthogonal to the moulding surface of the moulding apparatus.

### Brief description of the drawings

Reference will be made to the figure of the annexed drawing, wherein
- Figure 1 shows a perspective view of part of a moulding apparatus for a tread strip according to a preferred embodiment of present invention.
- Figure 2 shows a schematic view in direction A of figure 1 exemplarily showing the conventional extraction of the cured tread strip from the mould known in the prior art.
- Figure 3 shows a schematic sectional view taken along B-B according to a preferred embodiment of present invention.
- Figure 4a and 4b show an enlarged schematic view of the ejecting elements according to a preferred embodiment of present invention.
- Figure 5 shows an enlarged schematic view of an ejecting element according to a preferred embodiment of present invention.

### Detailed description of preferred embodiments of the invention

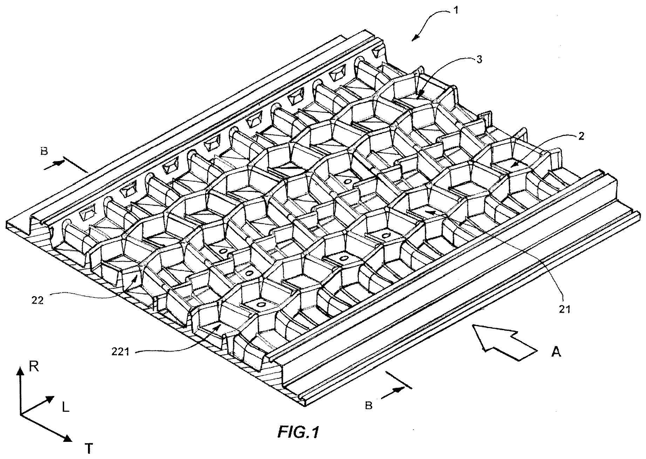

Fig. 1 shows a moulding apparatus (1) for a tread strip provided with a moulding surface (2) defining the inner cavity (3) of said moulding apparatus (1).

The moulding apparatus (1) is flat or substantially flat and extends mainly along a longitudinal axis (L) and a transverse direction (T). The height or width of the moulding apparatus (1) extends along the radial direction (R).

Said moulding surface (2) comprises a plurality of recesses (21) and a plurality of protrusions (22).

Since the moulding surface (2) reproduces the negative of the tread pattern profile, every protrusion (22) in the moulding surface (2) will correspond to a recess like a groove, a lug or a sipe in the cured tread strip pattern and every recess (21) in the moulding surface (2) will correspond to a protrusion like a land portion, a block or a rib, in the cured tread strip pattern. Said land portions, blocks or ribs on the cured tread strip are subject to come in contact with the ground during tire rolling after the cured tread strip has been applied onto the tire carcass during re-treading operations as commonly known in the prior art.

The radially inner surface (221) of each recess (21) of the mounding surface (2) corresponding to said land portions, blocks or ribs on the tread strip is flat or substantially flat.

The moulding apparatus (1) can be produced as single block but is usually formed by a plurality of adjacent mould segments of equal or different length arranged along the longitudinal direction (L) to form the desired length of the moulding apparatus (1).

During the vulcanization process of the tread strip the green (or uncured) tread strip is first positioned onto the moulding apparatus (1).

Then a press element (4) (not depicted in Fig. 1) substantially flat and parallel to the plane of the moulding element (1) described by the longitudinal axis (L) and the transversal axis (T) presses the green tread strip against the moulding surface (2) thereby forcing the green tread strip to penetrate into the cavity (3) of the moulding surface (2) and obtaining the desired tread strip pattern corresponding to the negative of the plurality of recesses (21) and protrusions (22).

After the curing process is completed, the cured tread strip is removed from the moulding apparatus (1).

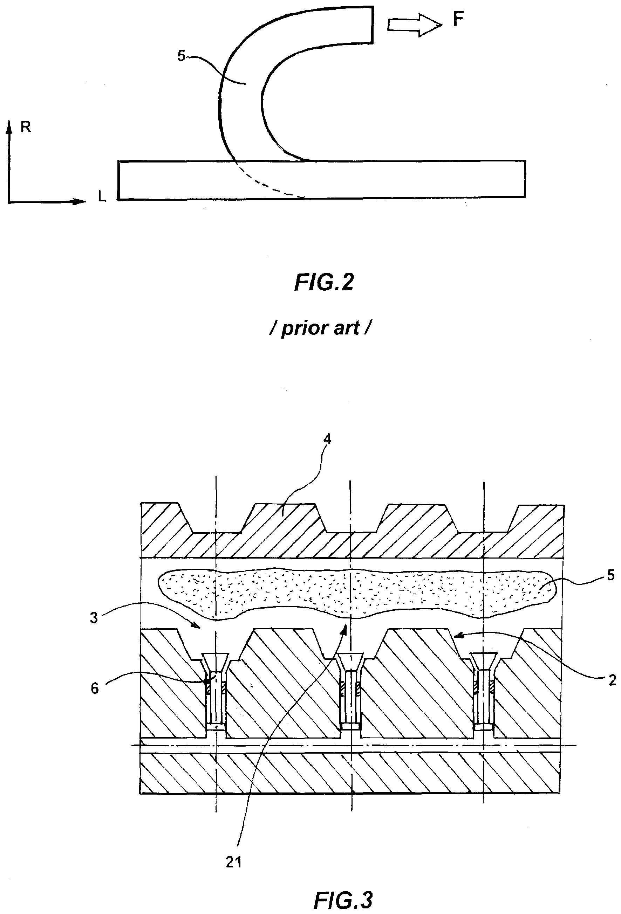

Fig. 2 shows a schematic lateral view of the moulding apparatus (1) wherein the cured tread strip (5) is extracted from the moulding apparatus (1) in the conventional way known in the prior art. In this conventionally known way, one end of the tread strip (5) is gripped by gripping means and extracted from the moulding element (1) by bending it by 180° and pulling it along the longitudinal direction (L) in the direction of the pulling force F.

During such operation every protrusion (22) on the moulding surface (2) and especially those protrusions (22) extending in the transversal direction (T) will constitute an obstacle in the process of extraction of the cured tread strip (5) shown in Fig. 2. The operation of extraction will result the more difficult the deeper are the recesses (21) in the moulding surface (2).

Fig. 3 shows a schematic section exemplary taken along B-B according to a preferred embodiment of present invention.

The moulding apparatus (1) comprises a plurality of ejecting elements (6) suitable for being retractably displaced so to protrude away of the moulding surface (2) into the moulding apparatus cavity (3).

Preferably said ejecting elements (6) are arranged along the shaped moulding surface (2) in positions corresponding to the recesses (21) of said moulding surface (2). The ejecting elements (6) are so arranged to be suitable for being retractably displaced so to protrude inside the cavity (3) in areas corresponding to recesses (21) in the moulding surface (2).

The axis of the retractable displacement of said ejecting elements (6) is substantially orthogonal to said moulding surface (2), more specifically orthogonal to the radially inner surface (221) of the recesses (21) of said moulding surface (2).

During the vulcanization process the green tread strip (5) is pressed inside the recesses (21) of the moulding surface (2). The deeper these recesses (21) the more difficult the extraction of the cured tread strip will result in these areas. As a consequence it is advantageous to position the ejecting elements (6) in areas corresponding to the recesses (21) in the moulding surface (2).

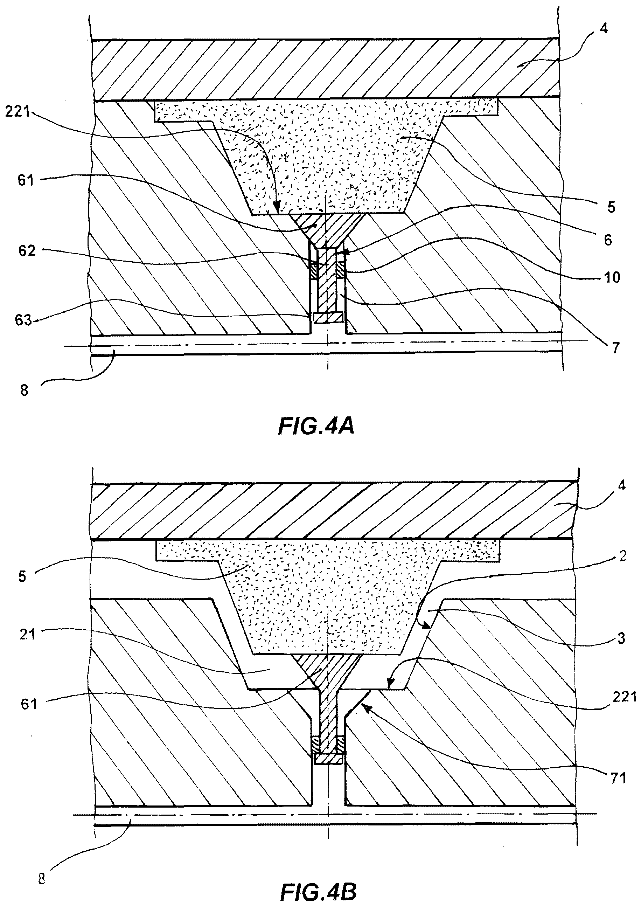

Fig. 4A shows in an explanatory way an enlarged schematic view of a single ejecting element (6) according to a preferred embodiment of present invention. The same arrangement of the ejecting element (6) is valid for the whole plurality of ejecting elements (6) comprised in the moulding apparatus (1).

The ejecting element (6) in a first position is arranged inside the moulding apparatus (1) and radially inside the moulding surface (2), more specifically the ejecting element (6) is arranged radially inside the radially inner surface (221) of a recess (21) of the moulding surface (2).

The moulding apparatus (1) comprises at least a bore (7) suitable for receiving the ejecting element (6) and for allowing its retractable displacement. The axis of said bore (7) is substantially orthogonal to said radially inner surface (221) of a recess (21) of said moulding surface (2).

In a preferred embodiment the ejecting element (6) comprises a first end portion (61) being suitable for being moved between a first position and a second position, wherein in the first position said first end portion (61) is flush or substantially flush with said radially inner surface (221) of a recess (21) of said moulding surface (2) as shown in Fig. 4A and wherein in the second position said first end portion (61) protrudes radially beyond said radially inner surface (221) of a recess (21) of said moulding surface (2) into the mould cavity (3) as shown in Fig. 4B.

As shown in Fig. 4B due to the displacement of the ejecting element (6) into the cavity (3) the cured tread strip (5) is lifted or extracted from a recess (21) of the moulding surface (2) in radial direction (R) thereby eliminating the risk of damaging the tread strip (5).

In a preferred embodiment the ejecting element (6) comprises a second, central portion (62) connected to the first, end portion (61) wherein the section area of the connecting part between first portion (61) and second portion (62) is smaller than the section area of the first portion (61) at the distal end away from the second portion (62).

In a preferred embodiment the first end portion (61) of said each ejecting element (6) has a frustoconical shape.

In a preferred embodiment the bore (7) has a first portion (71) adjacent to the radially inner surface (221) of a recess (21) of the moulding surface (2) with a frustoconical shape whose section area decreases while extending away from the radially inner surface (221).

In a preferred embodiment the first end portion (61) with frustoconical shape of said ejecting element (6) is suitable to engage with the first portion (71) with frustoconical shape of the bore (7), the first portion (71) with frustoconical shape of the bore (7) being the negative of the first end portion (61) with frustoconical shape of said ejecting element (6).

The surface roughness Ra of the respective surfaces of the first end portion (61) of the ejecting element (6) and the first portion (71) of the bore (7) are selected to enable a form fit allowing the passage of air but not the passage of uncured rubber. Such a roughness Ra is in the range of 0.8 µm to 2.5 µm, preferably in the range of 1.2 µm to 2.0 µm and more preferably in the range of 1.4 µm to 1.8 µm for the surface of the first end portion (61) of the ejecting element (6) and in the range of 0.8 µm to 2.5 µm, preferably in the range of 1.2 µm to 2.0 µm and more preferably in the range of 1.4 µm to 1.8 µm for the first portion (71) of the bore (7).

The form fit allowing the passage of air but not the passage of uncured rubber results in a ventilation system during the curing process. When the press element (4) presses the green tread strip (5) against the moulding surface (2) thereby forcing the green tread strip to penetrate into the cavity (3) of the moulding surface (2) and especially into the plurality of recesses (21) the air trapped in the recess (21) by the green tread strip (5) will evacuate through said form fit. Once the press element (4) will have reached its final position, i.e. the mold is closed and ready for the vulcanisation process, the uncured rubber material of the uncured tread strip inside a recess (21) will have displaced the ejecting element (6) inside the moulding apparatus (1) radially inside the radially inner surface (221) of a recess (21).

In a preferred embodiment each ejecting element (6) comprises a third, end portion (63) arranged with respect to the first end portion (61) at the distal end of the ejecting element (6). Said third, end portion (63) being suitable to be engaged by displacing means so as to retractably displace said ejecting element (6) to protrude radially outside of said radially inner surface (221) of a recess (21) of the moulding surface (2) into the moulding apparatus' cavity (3).

The sectional area of said third, end portion (63) of an ejecting element (6) is preferably equal or greater than the sectional area of the second, central portion (62) of the same ejecting element (6)

In a preferred embodiment the bore (7) in the moulding apparatus (1) for receiving the ejecting element (6) is at a first end in fluid communication with the cavity (3) of the moulding apparatus (1) and at a second end in fluid communication with a channel (8). A sealing element (10) is arranged in the bore (7), said sealing element (10) being preferably arranged around the ejecting means (6), more preferably around the second, central portion (62) of said ejecting element (6).

Said channel (8) is arranged inside the moulding apparatus (1) radially inside the moulding surface (2) or arranged outside the moulding apparatus (1). The channel (8) can alternatively be arranged partly inside the moulding apparatus (1) and partly outside the moulding apparatus (1).

The channel (8) can be in fluid communication with a plurality of bores (7) of a respective plurality of ejecting elements (6). Said channel (8) being in fluid communication with the ambient atmosphere or with a pressurized air system.

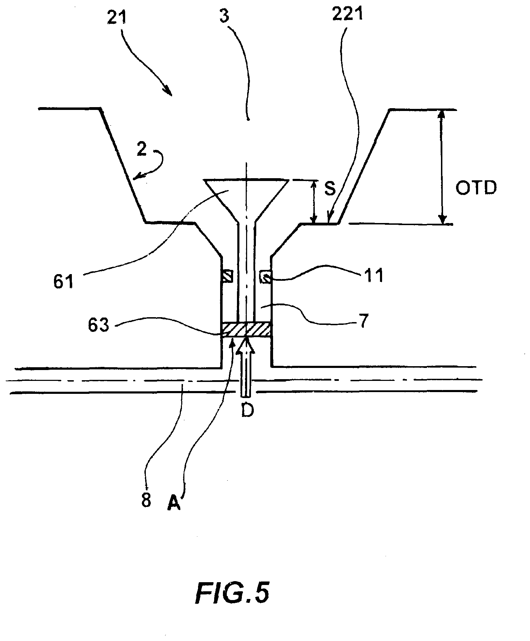

With reference to Fig. 5, once the channel (8) is put under pressure with pressurized air, the pressure in the channel (8) will act on the area A of the third, end portion (63) resulting in a displacement force D represented by the arrow, thereby displacing the ejecting element (6) inside the bore (7) and consequently its first end part (61) radially outside of said radially inner surface (221) of a recess (21) of the moulding surface (2) into the moulding apparatus' cavity (3).

Above described action resulting in the lifting-up and extraction of the cured tread strip (5) in that specific recess (21) of the moulding surface (2).

Considering the pressure of usual industrial air pressure system of between 0,4 MPa e 1,3 MPa (4 bar e 13 bar), preferably between 0,7 MPa e 0,9 MPa (7 bar e 9 bar) the preferred area A of the third end portion (63) is in the range of 300 to 1000 mm², preferably 600 to 800 mm².

The stroke S of the ejecting element (6), i.e. the distance in radial direction that the first end portion (61) of the ejecting element (6) covers from the first position in which it is flush or substantially flush with the radially inner surface (221) of a recess (21) of the moulding surface (2) to the second position in which it ranges radially outside the radially inner surface (221) of a recess (21) inside the cavity (3) of the moulding apparatus (1), corresponds to at least 25% of the overall tread depth (ODT) of the cured tread strip, i.e. the maximal depth of the recesses in the cavity (3) of the moulding surface (2); preferably to at least 50 % of the OTD and more preferably to 100% of the OTD.

The bore (7) comprises an abutting element (11) for engaging with the ejecting element (6) and limiting its stroke S during its displacement.

In a preferred embodiment said sealing element (10) and said abutting element (11) are different elements. In another embodiment said sealing element (10) and said abutting element (11) are the same element.

It is understood that the single embodiments can simultaneously be implemented on a moulding apparatus.

The present invention has been described so far with reference to referred embodiments. It is intended that there may be other embodiments which refer to the same inventive concept and fall within the scope of the following claims.

## Claims

1. A moulding apparatus (1), in particular a curing mould for making a pre-cured tread strip (5) for tyre re-treading, comprising a shaped moulding surface (2) comprising a plurality of recesses (21) each comprising a radially inner surface (221), said shaped moulding surface (2) defining the inner cavity (3) of said moulding apparatus, said moulding apparatus (1) comprising a plurality of ejecting elements (6) suitable for being retractably displaced so to protrude away of said moulding surface (2) into the moulding apparatus' cavity (3), wherein each of said ejecting element (6) comprises a third end portion (63) suitable to be engaged by displacing means so as to retractably displace said ejecting element (6) to protrude away of said moulding surface (2) into the moulding apparatus' cavity (3), **said moulding apparatus (1) being characterized in that** it comprises at least a bore (7) suitable for receiving said ejecting element (6) and for allowing its retractable displacement and wherein said bore (7) has a first portion (71) adjacent to the radially inner surface (221) of said recess (21) of the moulding surface (2), said first portion (71) having a frustoconical shape whose area decreases while extending away from the radially inner surface (221) and **in that** each of the ejecting element (6) comprises a first end portion (61) which has a frustoconical shape that is suitable to engage with the first portion (71) with frustoconical shape of the bore (7), the first portion (71) with frustoconical shape of the bore (7) being the negative of the first end portion (61) with frustoconical shape of said ejecting element (6) and wherein the surface roughness of the respective surfaces of the first end portion (61) of the ejecting element (6) and the first portion (71) of the bore (7) are selected to enable a form fit allowing the passage of air but not the passage of uncured rubber.

2. The moulding apparatus (1) according to claim 1 wherein said curing mould is flat and extends mainly along a longitudinal axis (L) and a transverse direction (T).

3. The moulding apparatus (1) according to any of the preceding claims wherein said ejecting elements (6) are arranged along the moulding surface (2) in positions corresponding to the recesses (21) of said moulding surface (2).

4. The moulding apparatus (1) according to any of the preceding claims wherein the axis of the retractable displacement of said ejecting elements (6) is orthogonal to said radially inner surface (221) of a recess (21).

5. The moulding apparatus according to any of the preceding claims wherein each of the ejecting element (6) comprises a first end portion (61) being suitable for being moved between a first position and a second position, wherein in the first position said first end portion (61) is flush with said radially inner surface (221) of the recesses (21), and wherein in the second position said first end portion (61) protrudes radially outside said radially inner surface (221) of the recesses (21) into the mould cavity (3).

6. The moulding apparatus according to claim 5 wherein said ejecting element (6) comprises a second central portion (62) connected to the first end portion (61) and wherein the section area of the connecting part between first portion (61) and second portion (62) is smaller than the section area of the first portion (61) at the distal end radially away from the second portion (62).

7. The moulding apparatus (1) according to claim 9 wherein the surface roughness Ra of said the first end portion (61) of the ejecting element (6) is in the range of 0.8 µm to 2.5 µm and the surface roughness Ra of the first portion (71) of the bore (7) is in the range between 0.8 µm to 2.5 µm.

8. The moulding apparatus (1) according to any of the preceding claims wherein the area A of the third end portion (63) is in the range of 300 to 1000 mm2, preferably 600 to 800 mm2.

9. The moulding apparatus according to any of the preceding claims wherein the displacing means is pressurized air.

10. The moulding apparatus (1) according to any of the preceding claims wherein said moulding surface (2) is formed by a plurality of adjacent mould segments.

## Patentansprüche

1. Formvorrichtung (1), insbesondere Vulkanisierungsform zum Herstellen eines vorvulkanisierten Laufflächenstreifens (5) zum Runderneuern von Reifen, umfassend eine geformte Formoberfläche (2), die eine Vielzahl von Vertiefungen (21) umfasst, die jeweils eine radial innere Oberfläche (221) umfassen, wobei die geformte Formoberfläche (2) den inneren Hohlraum (3) der Formvorrichtung definiert, wobei die Formvorrichtung (1) eine Vielzahl von Auswerfelementen (6) umfasst, die dazu geeignet sind, zurückziehbar verschoben zu werden, sodass sie von der Formoberfläche (2) weg in den Hohlraum (3) der Formvorrichtung hervorstehen, wobei jedes der Auswerfelemente (6) einen dritten Endabschnitt (63) umfasst, der dazu geeignet ist, von Verschiebemitteln in Eingriff gebracht zu werden, um das Auswerfelement (6) zurückziehbar zu verschieben, sodass es von der Formoberfläche (2) weg in den Hohlraum (3) der Formvorrichtung hervorsteht, **wobei die Formvorrichtung (1) dadurch gekennzeichnet ist, dass** sie mindestens eine Bohrung (7) umfasst, die dazu geeignet ist, das Auswerfelement (6) aufzunehmen und seine zurückziehbare Verschiebung zu ermöglichen, und wobei die Bohrung (7) einen ersten Abschnitt (71) angrenzend an die radial innere Oberfläche (221) der Vertiefung (21) der Formoberfläche (2) aufweist, wobei der erste Abschnitt (71) eine Kegelstumpfform aufweist, deren Fläche abnimmt, während er sich von der radial inneren Oberfläche (221) weg erstreckt, und dadurch, dass jedes der Auswerfelemente (6) einen ersten Endabschnitt (61) umfasst, der eine Kegelstumpfform aufweist, die geeignet ist, mit dem ersten Abschnitt (71) mit Kegelstumpfform der Bohrung (7) in Eingriff zu kommen, wobei der erste Abschnitt (71) mit Kegelstumpfform der Bohrung (7) das Negativ des ersten Endabschnitts (61) mit Kegelstumpfform des Auswerfelements (6) ist und wobei die Oberflächenrauheit der jeweiligen Oberflächen des ersten Endabschnitts (61) des Auswerfelements (6) und des ersten Abschnitts (71) der Bohrung (7) so ausgewählt sind, dass sie einen Formschluss ermöglichen, der den Durchgang von Luft, aber nicht den Durchgang von unvulkanisiertem Kautschuk ermöglicht.

2. Formvorrichtung (1) nach Anspruch 1, wobei die Vulkanisierungsform flach ist und sich hauptsächlich entlang einer Längsachse (L) und einer Querrichtung (T) erstreckt.

3. Formvorrichtung (1) nach einem der vorstehenden Ansprüche, wobei die Auswerfelemente (6) entlang der Formoberfläche (2) in Positionen angeordnet sind, die den Vertiefungen (21) der Formoberfläche (2) entsprechen.

4. Formvorrichtung (1) nach einem der vorstehenden Ansprüche, wobei die Achse der zurückziehbaren Verschiebung der Auswerfelemente (6) orthogonal zu der radial inneren Oberfläche (221) einer Vertiefung (21) ist.

5. Formvorrichtung nach einem der vorstehenden Ansprüche, wobei jedes der Auswerfelemente (6) einen ersten Endabschnitt (61) umfasst, der dazu geeignet ist, zwischen einer ersten Position und einer zweiten Position bewegt zu werden, wobei in der ersten Position der erste Endabschnitt (61) bündig mit der radial inneren Oberfläche (221) der Vertiefungen (21) ist, und wobei in der zweiten Position der erste Endabschnitt (61) radial außerhalb der radial inneren Oberfläche (221) der Vertiefungen (21) in den Formhohlraum (3) hervorsteht.

6. Formvorrichtung nach Anspruch 5, wobei das Auswerfelement (6) einen zweiten zentralen Abschnitt (62) umfasst, der mit dem ersten Endabschnitt (61) verbunden ist, und wobei die Querschnittsfläche des Verbindungsteils zwischen dem ersten Abschnitt (61) und dem zweiten Abschnitt (62) kleiner ist als die Querschnittsfläche des ersten Abschnitts (61) an dem distalen Ende radial weg von dem zweiten Abschnitt (62).

7. Formvorrichtung (1) nach Anspruch 9, wobei die Oberflächenrauheit Ra des ersten Endabschnitts (61) des Auswerfelements (6) im Bereich von 0,8 µm bis 2,5 µm liegt und die Oberflächenrauheit Ra des ersten Abschnitts (71) der Bohrung (7) im Bereich zwischen 0,8 µm und 2,5 µm liegt.

8. Formvorrichtung (1) nach einem der vorstehenden Ansprüche, wobei die Fläche A des dritten Endabschnitts (63) im Bereich von 300 bis 1000 mm2, vorzugsweise 600 bis 800 mm2 liegt.

9. Formvorrichtung nach einem der vorstehenden Ansprüche, wobei das Verschiebemittel Druckluft ist.

10. Formvorrichtung (1) nach einem der vorstehenden Ansprüche, wobei die Formoberfläche (2) durch eine Vielzahl von aneinander angrenzenden Formsegmenten gebildet wird.

## Revendications

1. Appareil de moulage (1), en particulier un moule de durcissement pour fabriquer une bande de rechapage pré-durcie (5) pour le rechapage de pneu, comprenant une surface de moulage profilée (2) comprenant une pluralité de renfoncements (21) comprenant chacun une surface radialement interne (221), ladite surface de moulage profilée (2) définissant la cavité interne (3) dudit appareil de moulage, ledit appareil de moulage (1) comprenant une pluralité d'éléments d'éjection (6) appropriés pour être déplacés de manière rétractable afin de faire saillie hors de ladite surface de moulage (2) vers l'intérieur de la cavité (3) de l'appareil de moulage, dans lequel chacun dudit élément d'éjection (6) comprend une troisième partie d'extrémité (63) appropriée pour être mise en prise par un moyen de déplacement de façon à déplacer de manière rétractable ledit élément d'éjection (6) pour qu'il fasse saillie hors de ladite surface de moulage (2) vers l'intérieur de la cavité (3) de l'appareil de moulage, **ledit appareil de moulage (1) étant caractérisé en ce qu'il** comprend au moins un alésage (7) approprié pour recevoir ledit élément d'éjection (6) et pour permettre son déplacement rétractable et dans lequel ledit alésage (7) a une première partie (71) adjacente à la surface radialement interne (221) dudit renfoncement (21) de la surface de moulage (2), ladite première partie (71) ayant une forme tronconique dont l'aire diminue tout en s'étendant hors de la surface radialement interne (221) et **en ce que** chacun du élément d'éjection (6) comprend une première partie d'extrémité (61) qui a une forme tronconique qui est appropriée pour venir en prise avec la première partie (71) avec une forme tronconique de l'alésage (7), la première partie (71) avec une forme tronconique de l'alésage (7) étant le négatif de la première partie d'extrémité (61) avec une forme tronconique dudit élément d'éjection (6) et dans lequel les rugosités de surface des surfaces respectives de la première partie d'extrémité (61) de l'élément d'éjection (6) et de la première partie (71) de l'alésage (7) sont sélectionnées pour permettre un ajustement de forme permettant le passage d'air mais pas le passage de caoutchouc non durci.

2. Appareil de moulage (1) selon la revendication 1 dans lequel ledit moule de durcissement est plat et s'étend principalement le long d'un axe longitudinal (L) et d'une direction transversale (T).

3. Appareil de moulage (1) selon l'une quelconque des revendications précédentes dans lequel lesdits éléments d'éjection (6) sont agencés le long de la surface de moulage (2) dans des positions correspondant aux renfoncements (21) de ladite surface de moulage (2).

4. Appareil de moulage (1) selon l'une quelconque des revendications précédentes dans lequel l'axe du déplacement rétractable desdits éléments d'éjection (6) est orthogonal à ladite surface radialement interne (221) d'un renfoncement (21).

5. Appareil de moulage selon l'une quelconque des revendications précédentes dans lequel chacun de l'élément d'éjection (6) comprend une première partie d'extrémité (61) étant appropriée pour être déplacée entre une première position et une deuxième position, dans lequel dans la première position ladite première partie d'extrémité (61) est aligné avec ladite surface radialement interne (221) des renfoncements (21), et dans lequel dans la deuxième position ladite première partie d'extrémité (61) fait saillie radialement à l'extérieur de ladite surface radialement interne (221) des renfoncements (21) vers l'intérieur de la cavité de moule (3).

6. Appareil de moulage selon la revendication 5 dans lequel ledit élément d'éjection (6) comprend une deuxième partie centrale (62) reliée à la première partie d'extrémité (61) et dans lequel l'aire de section de la pièce de liaison entre la première partie (61) et la deuxième partie (62) est plus petite que l'aire de section de la première partie (61) au niveau de l'extrémité distale radialement hors de la deuxième partie (62).

7. Appareil de moulage (1) selon la revendication 9 dans lequel la rugosité de surface Ra de ladite première partie d'extrémité (61) de l'élément d'éjection (6) se trouve dans la plage de 0,8 µm à 2,5 µm et la rugosité de surface Ra de la première partie (71) de l'alésage (7) se trouve dans la plage de 0,8 µm à 2,5 µm.

8. Appareil de moulage (1) selon l'une quelconque des revendications précédentes dans lequel l'aire A de la troisième partie d'extrémité (63) se trouve dans la plage de 300 à 1 000 mm2, de préférence 600 à 800 mm2.

9. Appareil de moulage selon l'une quelconque des revendications précédentes dans lequel le moyen de déplacement est de l'air sous pression.

10. Appareil de moulage (1) selon l'une quelconque des revendications précédentes dans lequel ladite surface de moulage (2) est formée par une pluralité de segments de moule adjacents.
